# EUROPÄISCHE PATENTSCHRIFT

(11) **EP 0 673 665 B1**
(45) Veröffentlichungstag und Bekanntmachung des Hinweises auf die Patenterteilung: **15.07.1998**
(21) Anmeldenummer: 95104076.5
(22) Anmeldetag: 20.03.1995
(51) Int. Cl.: B01D 46/24, D01H 11/00

(54) **Fluid-Filter und Verfahren zur Ausscheidung von mitgeführten Stoffpartikeln aus einem sich bewegenden Fluidstrom**
Fluid filter and process for separating dust particles from a fluid stream
Filtre pour un fluide et procédé pour éliminer des poussières d'un courant de fluide

(30) Priorität: 22.03.1994 US 215739
(43) Veröffentlichungstag der Anmeldung: 27.09.1995
(73) Patentinhaber: Luwa AG, CH-8047 Zürich (CH)
(72) Erfinder: Carter, Jerry T., Charlotte, North Carolina, 28210 (US); Rutishauser, Josef, CH-5620 Zufikon (CH)
(74) Vertreter: Patentanwälte Schaad, Balass, Menzl & Partner AG

(56) Entgegenhaltungen:
- EP-A- 0 011 995
- DE-A- 4 130 913

## Beschreibung

Die Erfindung betrifft ein Fluid-Filter und ein Verfahren zur Ausscheidung von mitgeführten Stoffpartikeln aus einem sich bewegenden Fluidstrom wie Luft. Die vorliegende Erfindung wird am besten verwendet in einer räumlich abgeschlossenen Umgebung, wie Textilverarbeitungs- und Garnherstellungsanlagen, wo die Luftqualität regelmässig überwacht und ständig durch Filtration verbessert werden muss.

Als Folge der finanziellen, umwelt- und gesundheitsbezogenen Belange hat eine richtige Luftfiltration an Arbeitsplätzen eine hohe Priorität bekommen. Ein erheblicher Anteil an Staub, Fusseln und anderen im Luftstrom mitgeführten Stoffpartikeln können durch Filtration aus dem Luftstrom entfernt werden, weshalb die klimatisierte Luft gereinigt und zum Arbeitsplatz zurückgeführt werden kann. Die Rückführung der klimatisierten Luft verringert die Kosten für Heizung und Kühlung der Anlage. Ausserdem verringert eine passende Luftfiltration die mit der häufigen Reinigung und notwendigen Reparatur von unsauberer Umgebungsluft ausgesetzten Maschinen einhergehenden Kosten. Saubere Maschinen stellen ein Produkt besserer Qualität her und verlangen weniger Unterhalt. Zusätzlich liefert eine richtige Luftfiltration eine gesündere Arbeitsumgebung und verringert den Ausstoss unsauberer Luft vom Arbeitsplatz in die Atmosphäre.

Frühere Filtrationsmethoden und -einrichtungen haben verschiedene Nachteile, wie eine niedrige Filtrierkapazität und -leistungfähigkeit. Staatliche Organisationen wie OSHA und EPA haben Richtlinien und Minimalstandards für die Luftqualität aufgestellt, welche durch viele, sowohl grosse als kleine industrielle und kommerzielle Betriebe eingehalten werden müssen. Dieses erhöhte Bewusstsein hat das Bedürfnis an leistungsfähigen und wirksamen Mitteln vergrössert, die Luft in industriellen und kommerziellen Betrieben zu reinigen.

Aus der DE 41 30 913 A1 ist eine Trommelfilteranordnung bekannt, welche mehrere, einzelne, rotierbare Trommelfilter aufweist. Aus der EP 0 011 995 ist eine weitere Trommelfilteranordnung mit mehreren, in Serie angeordneten, rotierbaren Trommeln gleichen Durchmessers bekannt. Diese beiden bekannten Anordnungen weisen den Nachteil auf, dass die Filterfläche im Vergleich zum erforderlichen Volumen der Filteranordnung relativ klein ist, und dass die Trommeln rotierend angetrieben sind, was aufwendig und störungsanfällig ist.

Die vorliegende Erfindung richtet sich auf die Probleme der bekannten Filter, indem ein einstufiges Fluidfilter vorgesehen ist, welches relativ klein ist mit einer hohen Filterkapazität und -leistungsfähigkeit. Die Erfindung schliesst eine grosse Oberfläche des Filtermediums und eine Reinigungseinrichtung für die periodische Reinigung des Filtermediums ein.

### Zusammenfassung der Erfindung

Es ist deshalb Aufgabe der Erfindung, ein einstufiges Fluidfilter vorzusehen, um mitgeführte Stoffpartikel aus einem Transportstrom eines Fluids wie eines Gases oder einer Flüssigkeit auszuscheiden.

Diese Aufgabe wird durch die Merkmale der Patentansprüche 1, 9 und 16 gelöst.

Erfindungsgemäss ist ein einstufiges Fluidfilter vorgesehen, welches verschiedene zueinander beabstandete und ineinandergesetzte rohrförmige, in einem Filtergebilde gehaltene Filtrationsmedien aufweist, um einen sich bewegenden Fluidstrom aufzunehmen und zu filtrieren.

In einer bevorzugten Ausführung der Erfindung ist ein Filter vorgesehen, welches verschiedene ringförmige ineinandergesetzte Filterrahmen aufweist, um die jeweilige Filtrationsmedien für die Filtration des sich bewegenden Fluidstromes an diesen zu befestigen.

In einer weiteren bevorzugten Ausführung der Erfindung ist ein Fluidfilter vorzgesehen, das eine Filterreinigungseinrichtung für die konstante Reinigung der Filtrationsmedien aufweist, um die Filtrierkapazität des Filters zu erhöhen.

In einer anderen bevorzugten Ausführung der Erfindung ist ein Fluidfilter mit einer Filterreinigungseinrichtung vorgesehen, welche die Filtrationsmedien abhängig von einem vorbestimmten Druckabfall im Fluid zwischen der stromaufwärts liegenden Filteroberfläche und der stromabwärts liegenden Filteroberfläche in Abständen reinigt.

In einer weiteren bevorzugten Ausführung der Erfindung ist ein Fluidfilter mit einer Filterreinigungseinrichtung vorgesehen, welche die Filtermedia aufgrund eines Zeitgebers mit einem programmierten Zyklus reinigt.

In einer anderen bevorzugten Ausführung der Erfindung ist ein Fluidfilter mit einer relativ gleichmässigen Leistungsfähigkeit vorgesehen.

In einer weiteren Ausführung der Erfindung ist ein Fluidfilter vorgesehen, welches relativ klein ist in bezug auf Filter mit einer vergleichbaren Filtrationskapazität und -leistungsfähigkeit.

Diese und weitere Vorteile der vorliegenden Erfindung werden in den bevorzugten nachstehenden Ausführungsformen mit einem Fluidfilter zum Ausscheiden von mitgeführten Stoffpartikeln aus einem sich bewegenden Fluidstrom beschrieben. Das Fluidfilter enthält ein Filtergebilde, um die Filter auf eine Tragfläche zu befestigen, mehrere ineinandergesetzte Filterrahmen und ein durch jeden der Filterrahmen getragenes Filtrationsmedium.

### Kurze Beschreibung der Zeichnungen

Es zeigt:
- Fig. 1: eine perspektivische Ansicht auf zwei nebeneinanderliegende erfindungsgemässe Fluidfilter;
- Fig. 2: eine perspektivische Ansicht auf ein einzelnes Fluidfilter, welche die äusseren Flächen des Filters ausgebrochen und die Bewegungsrichtung der durch das Filtrationsmedium und die Absaugdüse fliessenden Luft zeigt;
- Fig. 3: einen Querschnitt durch ein Fluidfilter, wobei die Absaugdüsen der jeweiligen Rohre in ihren inneren Stellungen gezeigt sind, gerade bevor das Verteilerrohr nach aussen bewegt wird;
- Fig. 4: einen Querschnitt durch das Fluidfilter, wobei die Absaugdüsen der jeweiligen Rohre in ihren äusseren Stellungen gezeigt sind, gerade bevor das Verteilerrohr nach innen bewegt wird;
- Fig. 5: einen Teil-Querschnitt eines Fluidfilters, der die Befestigung der jeweiligen Endbereichen des Filtrationsmediums an das Fluidfilter zeigt;
- Fig. 6: eine Unteransicht einer Absaugdüse, die die im Düsenkopf gebildete Öffnung zeigt, um das Filtrationsmedium zu erfassen;
- Fig. 7: einen Querschnitt und eine Teil-Ansicht des Tragrohres, die den Antrieb und die Antriebswelle zeigen;
- Fig. 8: eine Teil-Vergrösserung in Ansicht auf das Verteilerrohr und die Rohre, die einen einzelnen Satz Absaugdüsen gestrichelt zeigt;
- Fig. 9: eine schematische Explosionsdarstellung des Schwenkmechanismus;
- Fig. 10: eine Vorderansicht des Schwenkmechanismus;
- Fig. 11: einen vergrösserten schematischen Querschnitt längs der Linie 11-11 der Figur 10, welcher die Verbindung des Kegels mit dem Kanal zeigt;
- Fig. 12: eine vergrösserte schematische Ansicht des Kegels und des Kanals, wobei von jedem ein Teil der äusseren Fläche weggebrochen und das Rollenlager in Querschnitt gezeigt ist;
- Fig. 13: eine vergrösserte Vorderansicht des teilweise gestrichelt dargestellten Fluidfilters, die die Drehbewegung des Verteilerrohres andeutet und den geringfügigen Bewegungsgrad des Kanals zeigt, und
- Fig. 14: eine vergrösserte Hinteransicht des Fluidfilters.

### Beschreibung eines bevorzugten und besten Ausführungsbeispiels

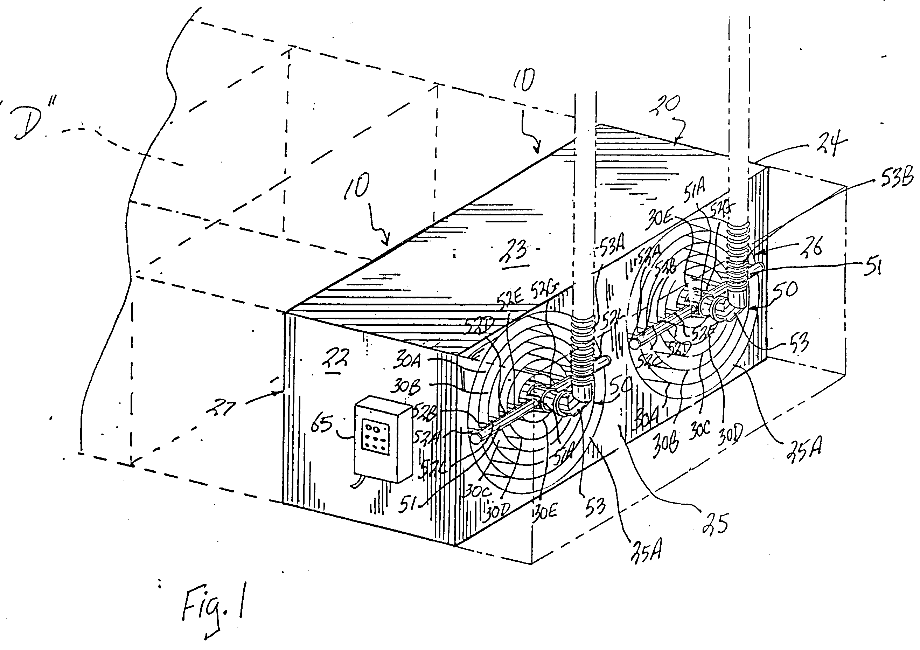

Es wird ausdrücklich auf die Zeichnungen Bezug genommen. In Figur 1 ist ein erfindungsgemässes Fluidfilter dargestellt und allgemein mit dem Bezugszeichen 10 angegeben. Das Fluidfilter 10 wird am besten in industriellen Umgebungen wie Textilbetrieben und dergleichen verwendet, um mitgeführte Stoffpartikel wie Fussel und Staub aus einem Luftstrom auszuscheiden, um die Apparatur innerhalb des Betriebes weniger der dort erzeugten unsauberen Luft auszusetzen. Um die Luft in relativ grossen Betrieben zu reinigen, können zwei oder mehr Fluidfilter 10, wie in Figur 1 gezeigt, erwünscht sein. Vorzugsweise ist jedes Fluidfilter 10 geeignet, um zwischen 20'000 bis 50'000 cfm (etwa 5663 bis 14157 m³/Min) Luft zu filtrieren und zu reinigen. Gemäss einer bevorzugten Ausführung weist das Fluidfilter eine Filtrierkapazität von 23'500 cfm (etwa 6654 m³/Min) auf. Ausserdem kann das erfindungsgemässe Fluidfilter in anderen Umgebungen verwendet werden, um Fluiden wie Gase und Flüssigkeiten zu filtrieren.

### Fluidfilter

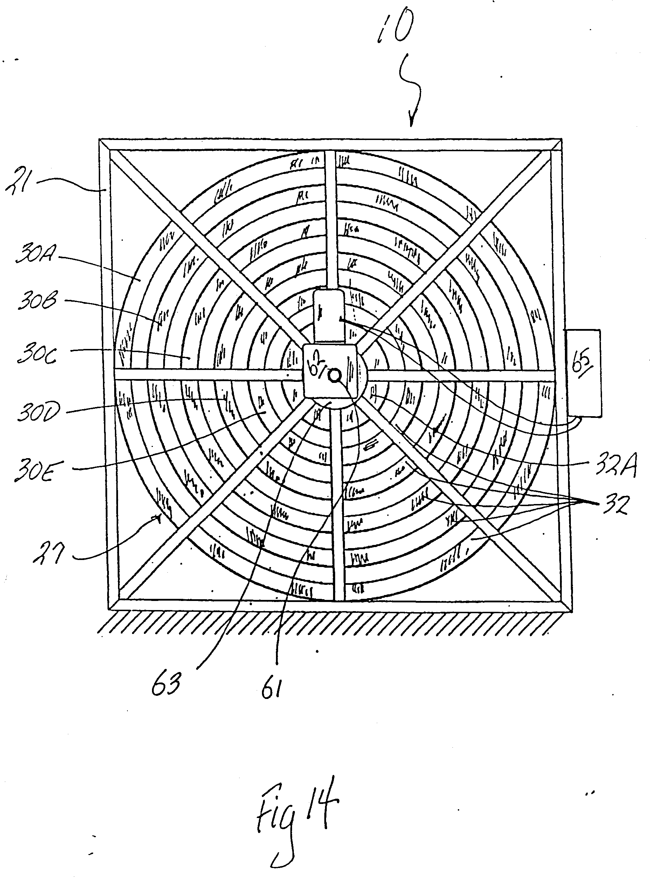

Das Fluidfilter 10 in Figur 1 enthält ein Filtergebilde 20 zur Befestigung des Filters 10 auf einer Tragfläche, wie dem Boden eines Textilbetriebes. Gemäss einer bestimmten Ausführung enthält das Filtergebilde 20 einen hinteren Stützrahmen 21 (vergl. Figur 14), mehrere Wände 22 bis 25, einen Fluid-Einlassbereich 26 und einen Fluid-Auslassbereich 27. Die Stirnwand 25 des Filtergebildes 20 enthält eine Öffnung 25A, die den durch das Filter 10 hindurchzuführenden Fluidstrom hineinlässt.

Wenn zwei Filter 10 in Kombination benötigt werden, sind die Filter 10 vorzugsweise nicht durch Wände voneinander getrennt. Das Filtergebilde 20 kann auch nur einen hinteren Stützrahmen 21 und eine Stirnwand 25 enthalten, um das Filter 10 auf der Tragfläche zu befestigen. In einer (nicht gezeigten) Ausführung können mehrere Filter 10 dadurch in Reihen und Kolonnen aufgestellt werden, dass die Filter vertikal gestapelt und Seite an Seite aufgestellt werden. Eine Filterreinigungseinrichtung 50, die unten in weiteren Einzelheiten beschrieben wird, ist im Fluid-Einlassbereich 26 des Filtergebildes 20 angeordnet. Übliche Rohrleitungen "D" stehen in Wirkverbindung mit dem Fluid-Auslassbereich 27 des Filtergebildes 20. Ein (nicht gezeigter) Ventilator oder Gebläse steht mit den Rohrleitungen "D" in Verbindung, um eine Saugkraft zu erzeugen, damit die Luft vom den betrieblichen Arbeitsplatz umgebenden Bereich durch das Fluidfilter 10 und durch die Rohrleitungen "D" in eine Strömung abgezogen wird. Während der Ventilator typischerweise ausserhalb der Arbeitseinrichtung aufgehängt ist, ist der grösste Teil der Rohrleitungen "D" im allgemeinen innerhalb der Einrichtung angeordnet und kann in irgendeiner gewünschten und bekannten Art ausgebildet und konstruiert werden.

Wie in Figuren 1 bis 5 gezeigt, enthält das Fluidfilter 10 mehrere konzentrische vollwandige Trommeln 30A bis 30E, die ineinandergesetzt und auf einem radialen Abstand zueinander angeordnet sind, und Filtrationsmedien 31A bis 31F, die in Filtrierverbindung mit dem Fluid-Einlassbereich 26 des Filtergebildes 20 stehen. Die Filtrationsmedien 31A bis 31F dienen dazu, Stoffpartikel aus dem Luftstrom auszuscheiden, während der Luftstrom mittels des Ventilators und der Rohrleitungen "D" durch das Filter 10 hindurchgezogen wird.

Die Filtrationsmedien 31A bis 31F sind vorzugsweise rohrförmige Zellen aus Gewebe wie Filz. Gemäss einer Ausführung wiegt der Filz ungefähr 11 bis 13 OPSY ("ounce per square yard"; etwa 373 bis 441 g/m²), und wird aus 100% Polyester mit 6 Denier gebildet. Zur zusätzlichen Verstärkung können die Filtrationsmedien 31A bis 31F angesengt und auf jeweils stromabwärts liegende Filterflächen 39 aufgesteckt sein.

Jede der ineinandergesetzten Trommeln 30A bis 30E ist vorzugsweise konisch, vom hinteren Ende der Trommel 30 bis zum vorderen Ende der Trommel 30 leicht einwärts verjüngt. Zum Beispiel ist der Durchmesser am hinteren Ende der Trommel 30A ungefähr 74 Zoll (188 cm) und der Durchmesser am vorderen Ende ungefähr 70 Zoll (178 cm). Vorzugsweise ist der zwischen zwei gegenüberliegenden Trommeln 30A bis 30E bestimmte Abstand ungefähr 4 bis 8 Zoll (10 bis 20 cm).

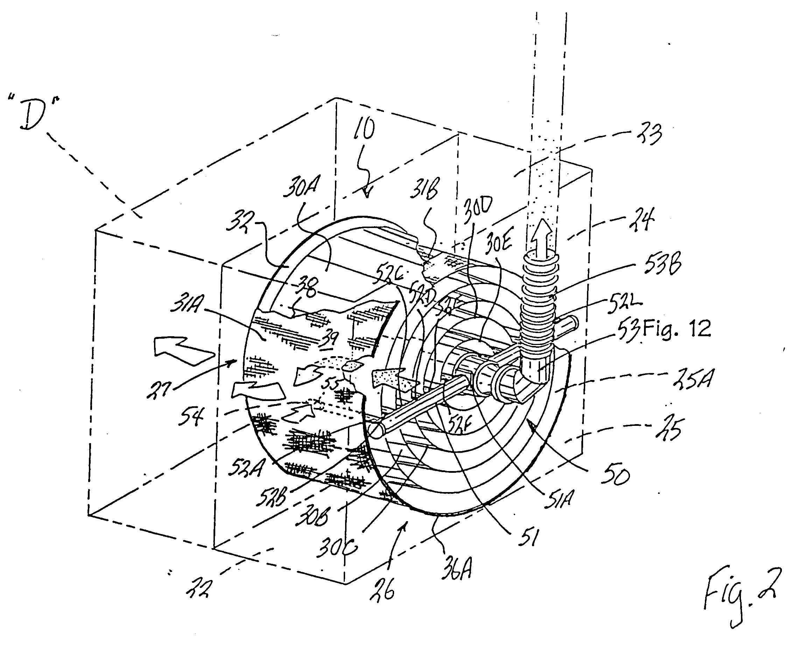

Wie am besten in den Figuren 2 bis 5 ersichtlich, enthält jede der Trommel 30A bis 30E einen sich radial erstreckenden Ringflansch 32, der auf einem hinteren Aussenrand der Trommel 30 angeordnet ist, und einen Ringkanal 36 auf einem vorderen Aussenrand der Trommel 30. Ein ähnlich aufgebauter Ringkanal 36A ist vorzugsweise an der Mündung der Stirnwand-Öffnung 25A angeordnet, und bestimmt zusammen mit dem hinteren Flansch 32 der äussersten Trommel 30A einen am aussenliegendsten, das Filtrationsmedium tragenden Filterrahmen. Gemäss einer Ausführung weist der Ringkanal 36A einen äusseren Durchmesser von ungefähr 82 Zoll (208 cm) auf.

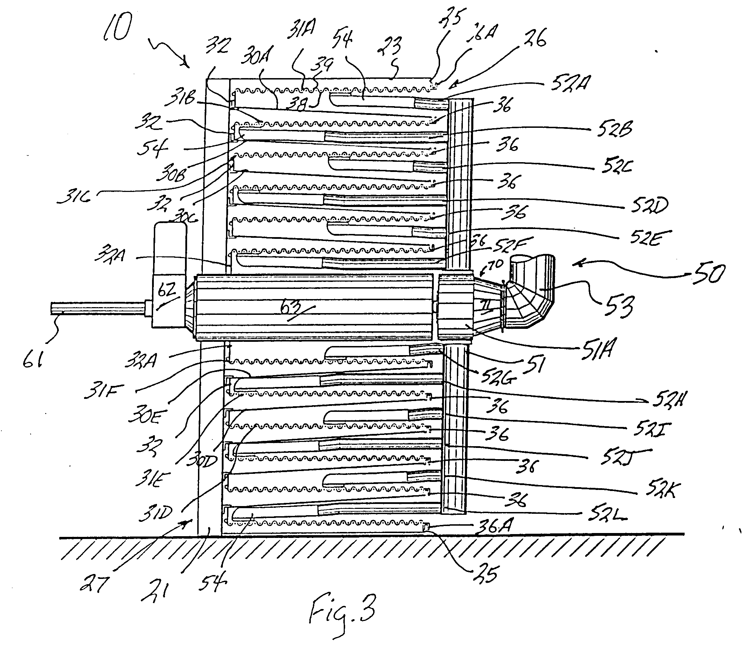

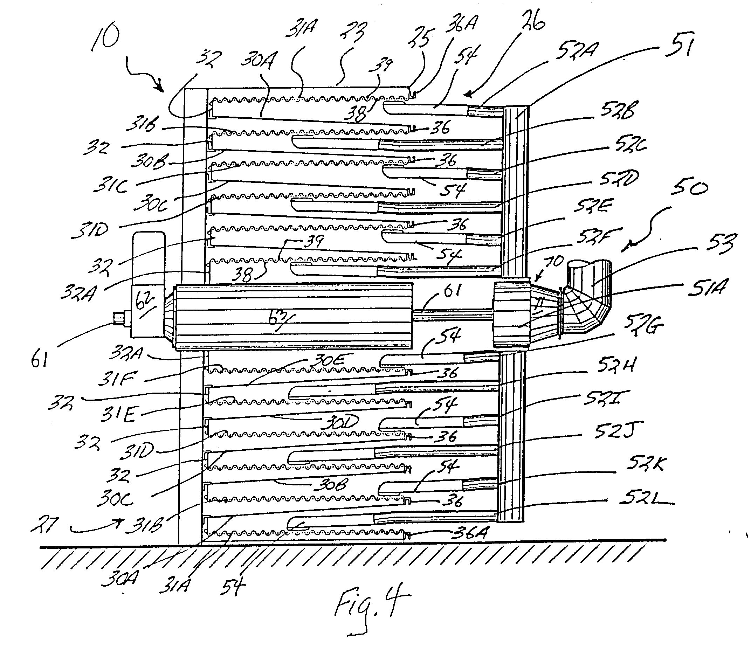

Der hintere Flansch 32 und der vordere Kanal 36 der jeweiligen Trommel 30A bis 30E bestimmen zusammen zusätzliche ineinandergesetzte Filterrahmen, die die Filtrationsmedien 31A bis 31F innerhalb des Filtergebildes 20 tragen. Zum Beispiel wirken der vordere Kanal 36 der Trommel 30A und der hintere Flansch 32 der benachbarten Trommel 30B zusammen, um die gegenüberliegenden Enden des Filtrationsmediums 31B mit dem Fluidfilter 10 zu verbinden. Wie am besten in den Figuren 3 und 4 ersichtlich, ist ein ähnlich ausgebildeter Flansch 32A am hinteren Ende eines zentral im Filtergebilde 20 vorgesehenen Tragrohres 63 angeordnet. Somit bestimmt der vordere Kanal 36 der Trommel 30E zusammen mit dem Flansch 32A einen innersten Rahmen, um das Filtrationsmedium 31F darauf aufzuspannen. Das Fluidfilter 10 enthält vorzugsweise 4 bis 8 ineinandergesetzte Filterrahmen und entsprechende Filtrationsmedien.

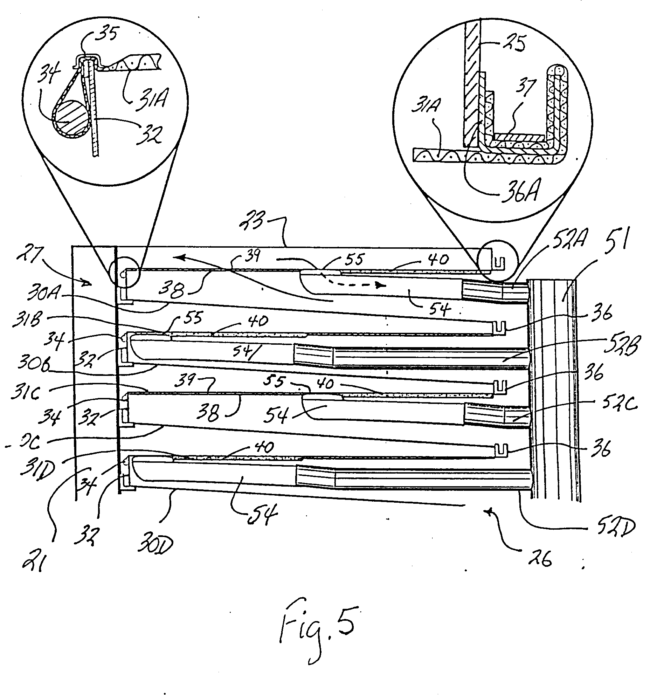

Die Befestigung eines einzigen Filtrationsmediums 31A am Kanal 36A der Stirnwand 25 und am hinteren Flansch 32 der äussersten Trommel 30A ist in Einzelheiten in Figur 5 dargestellt. Jedes der Filtrationsmedien 31A bis 31F enthält gleiche Elemente, und ist am vorderen Kanal 36 und am hinteren Flansch 32 der jeweiligen Trommel 30A bis 30F in ähnlicher Weise befestigt. Wie gezeigt, enthält das Filtrationsmedium 31A einen ringförmigen elastischen Strang 34, der mit dem hinteren Ende des Filtrationsmediums 31A verbunden und über die obere Kante des hinteren Flansches 32 der Trommel 30A gespannt ist. Eine Klammer 35, wie eine Kupplung aus einem T-Bolzenriegel und einem V-Riemen hergestellt und vertrieben durch Clampco, ist über dem hinteren Flansch 32 angebracht, um das hintere Ende des Filtrationsmediums 31A sicher mit dem an der Mündung der Öffnung 25A in der Stirnwand 25 des Filtergebildes 20 angeordneten Kanal 36a zu befestigen. Ein flacher Halteriemen 37 ist vorzugsweise innerhalb des Kanals 36A angeordnet, um das vordere Ende des Filtrationsmediums 31A am Kanal 36A festzuhalten. Die Befestigung des vorderen Endes der Filtrationsmedien 31B bis 31F an die Kanäle 36 der Trommel 30A bis 30E ist identisch mit der oben in bezug auf den Kanal 36A der Stirnwand 25 erwähnten.

Wie mit den Richtungspfeilen in den Figuren 2 und 5 angedeutet, bewegt sich der Luftstrom durch die Filtrationsmedien 31A bis 31F von der stromaufwärts liegenden Fläche 38 zur stromabwärts liegenden Fläche 39 der jeweiligen Filtrationsmedien 31A bis 31F. In der Folge sammelt sich über eine gewisse Zeitspanne eine dünne Schicht 40 aus Stoffpartikeln auf den jeweiligen stromaufwärts liegenden Filterflächen 38 an (siehe Figur 5). Um einen sicheren und leistungfähigen Betrieb des Fluidfilters 10 zu gewährleisten, muss diese Schicht 40 regelmässig entfernt werden, wie in Einzelheiten unten beschrieben.

### Filterreinigungseinrichtung

Wie am besten in den Figuren 1 bis 4 dargestellt, ist die Filterreinigungseinrichtung 50 im Fluid-Einlassbereich 26 des Filtergebildes 20 angeordnet, und enthält ein langgestrecktes Verteilerrohr 51, das verschiedene zueinander beabstandete Aluminiumrohre 52A bis 52L aufweist, die längs des Verteilerrohres 51 angeformt sind. Die Rohre 52A bis 52L ragen vom Verteilerrohr 51 nach aussen und befinden sich im Raum zwischen den benachbarten Trommeln 30A bis 30E. Das Verteilerrohr 51 steht in Wirkverbindung mit einem Leitkanal 53, das zu einem (nicht gezeigten) Ventilator oder Gebläse führt, um eine negative Luftströmung, oder Absaugung, durch das Verteilerrohr 51 und die Rohre 52A bis 52L zu erzeugen.

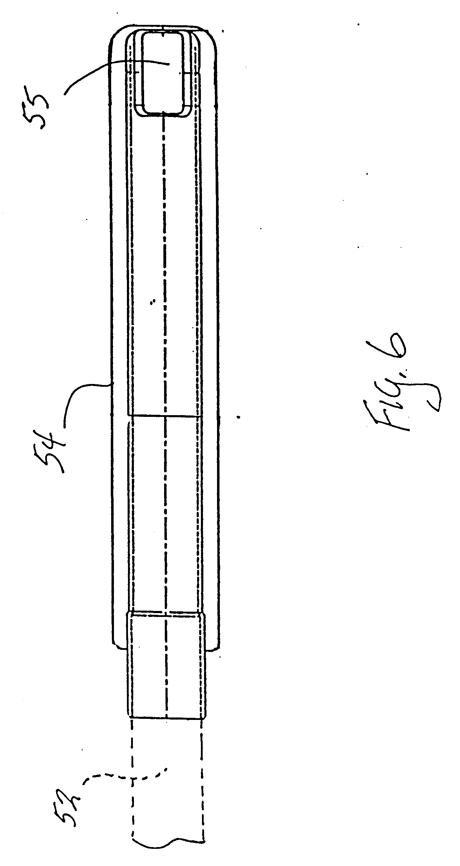

Jedes Rohr 52A bis 52L enthält vorzugsweise eine biegsame, an seinem Ende befestigte Absaugdüse 54 aus Polyäthylen, um die stromaufwärts liegende Filterfläche 38 der jeweiligen Filtrationsmedien 31A bis 31F zu erfassen. Wie am besten aus Figur 5 zu entnehmen, weist jedes Rohr 52A bis 52L vorzugsweise einen nach oben zeigenden Krümmer von etwa 2 Grad auf, um die biegsame Düse 54 darauf festzuhalten und den Konturen der jeweiligen Filtrationsmedien 31A bis 31F während der Reinigung folgen zu können. Die negative Luftströmung durch die Rohre 52A bis 52L und durch die entsprechenden Absaugdüsen 54 bewirkt, dass die Schicht 40 der eingefangenen Stoffpartikel von den stromaufwärts liegenden Filterflächen 38 der Filtrationsmedien 31A bis 31F entfernt wird, und somit die Fluidströmung durch die Filtrationsmedien 31A bis 31F erhöht und die gesamte Filtrierleistungsfähigkeit und -kapazität verbessert wird. Wie in Figur 6 ersichtlich, weist jede Absaugdüse 54 vorzugsweise eine am Düsenkopf geformte Öffnung 55 auf, um einen Bereich mit einer beschleunigten negativen Luftströmung festzulegen. In den Figuren 2 bis 5 ist die gerichtete Bewegung der negativen Luftströmung durch die Öffnung 55 der jeweiligen Absaugdüsen 54 und die gleichzeitige Bewegung des Luftstroms durch die Filtrationsmedien 31A bis 31F am besten dargestellt.

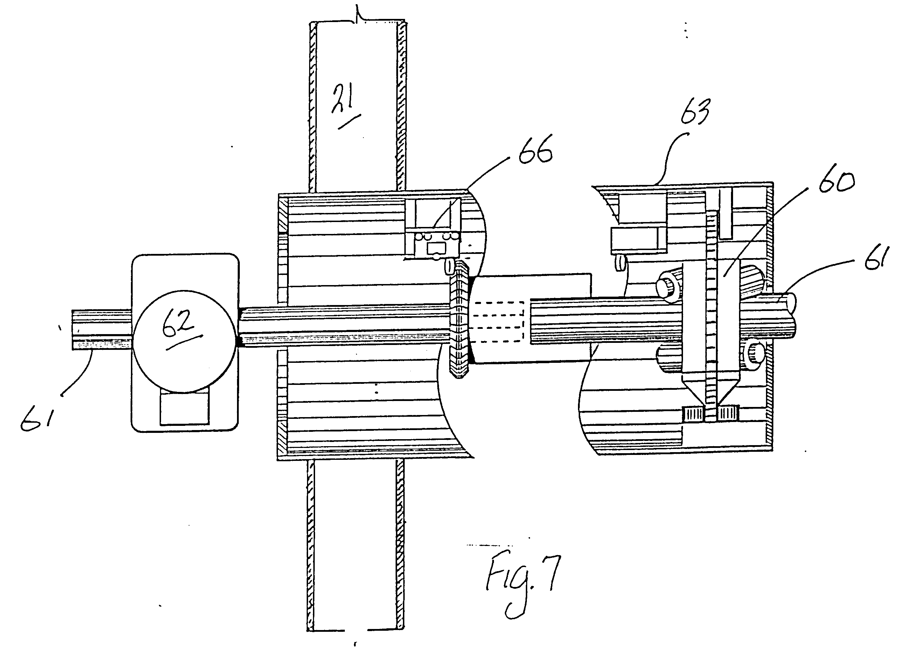

Wie in Figur 7 gezeigt, enthält die Reinigungseinrichtung 50 ferner einen zentral im Filtergebilde 20 vorgesehenen Antrieb 60, der mit dem Verteilerrohr 51 zusammenwirkt, um die Absaugdüsen 54 bezüglich der Filtrationsmedien 31A bis 31F zu drehen und hin- und herzubewegen. Der Antrieb 60 ist vorzugsweise der durch Zero Max hergestellte und vertriebene Linearantrieb "Roh'lix". Der Antrieb 60 dreht auf einer Antriebswelle 61 und setzt die Drehbewegung der Antriebswelle 61 in eine Linearbewegung um. Die Antriebswelle 61 steht mit einem Ende in Wirkverbindung mit einem Getriebemotor 62 und ist mit dem gegenüberliegenden Ende an einem zentralen Teil 51A des Verteilerrohres 51 verbunden. Der Getriebemotor 62 treibt die Antriebswelle 61 an und löst die Linearbewegung der Antriebswelle 61 und des Verteilerrohres 51 aus.

Die Antriebswelle 61 und der Antrieb 60 sind in einem hohlen Trägerrohr 63 untergebracht, das an dem hinteren Tragrahmen 21 des Filtergebildes 20 befestigt ist. Wie am besten in Figur 14 ersichtlich, ist ein Bedienungsgerät 65 auf der Seite des Filtergebildes 20 angebracht, um den Betrieb des Getriebemotors 62 und der Antriebswelle 61 zu steuern.

Der Antrieb 60 weist vorzugsweise eine Linearumsetzung von 0,025 Zoll (etwa 0,63 mm) bis 6,00 Zoll (etwa 152,40 mm) pro Umdrehung auf. Im allgemeinen kann die Umsetzung bis dreimal den Durchmesser der Antriebswelle 61 betragen und so festgelegt werden, dass sich eine Linearbewegung mit einer Geschwindigkeit von bis zu 70 Zoll (etwa 1,77 m) pro Minute ergibt. Grenzschalter 66, die elektrisch in Wirkverbindung mit dem Bedienungsgerät 65 stehen, regeln den Grad der Vorwärts- und Rückwärtsbewegung der Antriebswelle 61 und des Verteilerrohres 51.

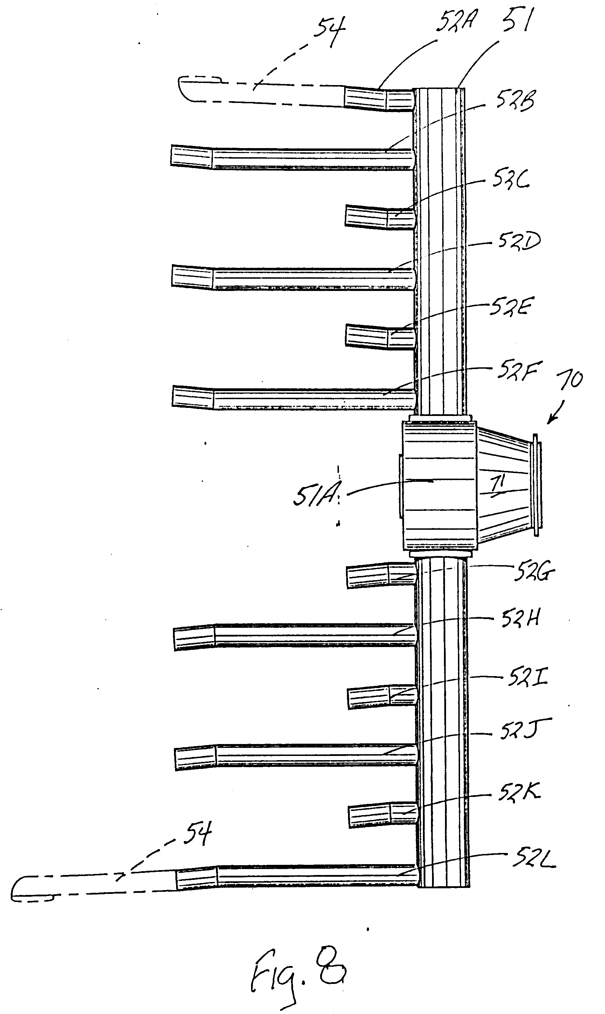

Das Verteilerrohr 51 enthält vorzugsweise zwei Rohre 52A und 52L und entsprechende Absaugdüsen 54, die jede eines der Filtrationsmedien 31A bis 31F reinigen. Wie am besten in Figur 8 ersichtlich, ist eines von zwei Rohren 52A bis 52L relativ kurz, um eine vordere Hälfte der Filtrationsmedien 31A bis 31F zu reinigen, während das zweite Rohr 52A bis 52L relativ lang ist, um die hintere Hälfte der Filtrationsmedien 31A bis 31F zu reinigen. Zum Beispiel wirken die Rohre 52A und 52L mit den zugehörigen Absaugdüsen 54 zusammen, um gemeinsam die gesamte stromaufwärts liegende Filterfläche 38 des Filtrationsmediums 31A zu reinigen. Jedes der Rohre 52A und 52L mit den Absaugdüsen bewegt sich auf einer spiralförmigen Bahn und steht jeweils mit der stromaufwärts liegenden Filterfläche 38 der vorderen oder der hinteren Hälfte des Filtrationsmediums 31A in Wirkverbindung. Gemäss einer bestimmten Ausführung sind die relativ kurzen Rohre je etwa 8 bis 10 Zoll (etwa 20,3 bis 25,4 cm) und die relativ langen Rohre je etwa 22 bis 26 Zoll (etwa 55,9 bis 66,0 cm) lang.

Somit dreht sich das Verteilerrohr 51 und bewegt sich durch die Wirkung der Antriebswelle 61 und des Antriebs 60 gleichzeitig zwischen der in Figur 3 gezeigten Stellung und der in Figur 4 gezeigten Stellung hin und her, so dass die gesamte stromaufwärts liegende Filterfläche 38 jedes Filtrationsmediums 31A bis 31F durch das jeweilige Paar aus relativ langen und relativ kurzen Rohren 52A bis 52L und den zugehörigen Absaugdüsen 54 gereinigt wird.

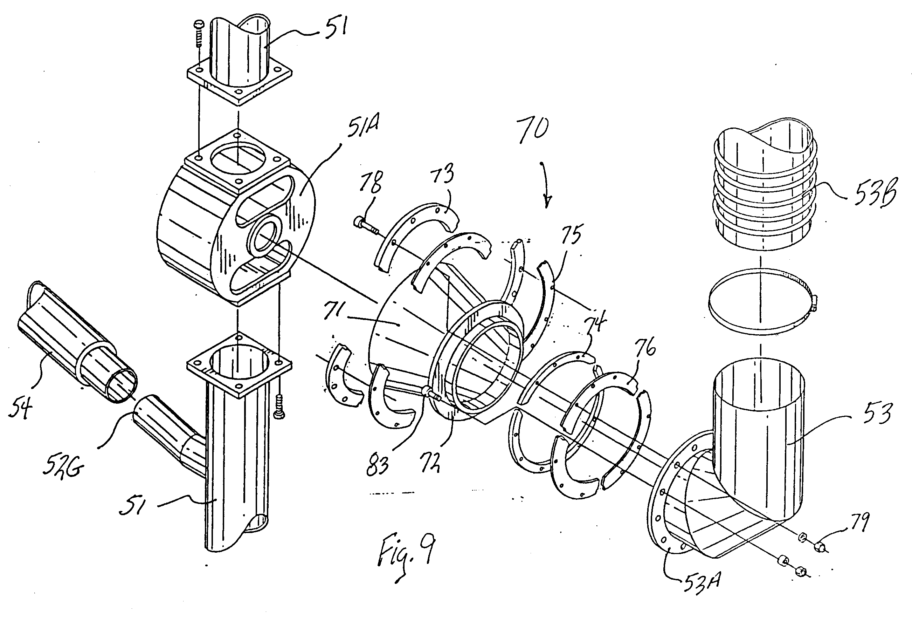

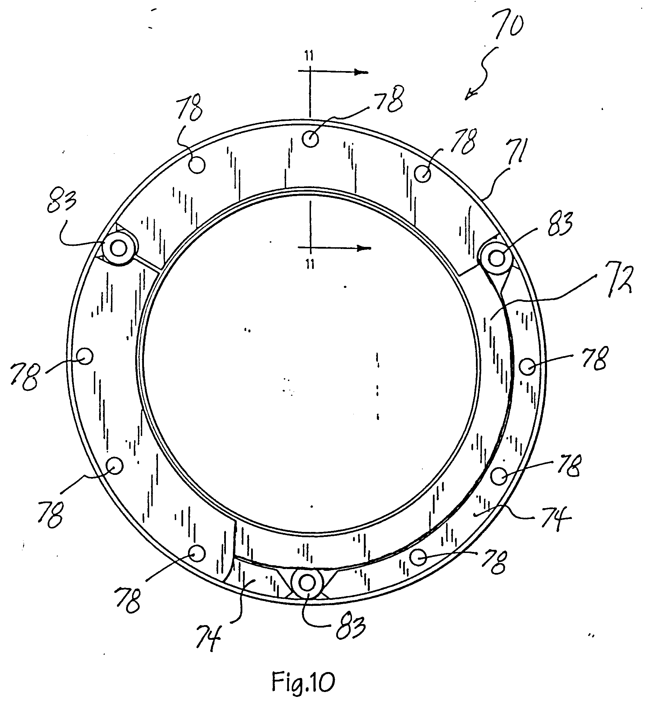

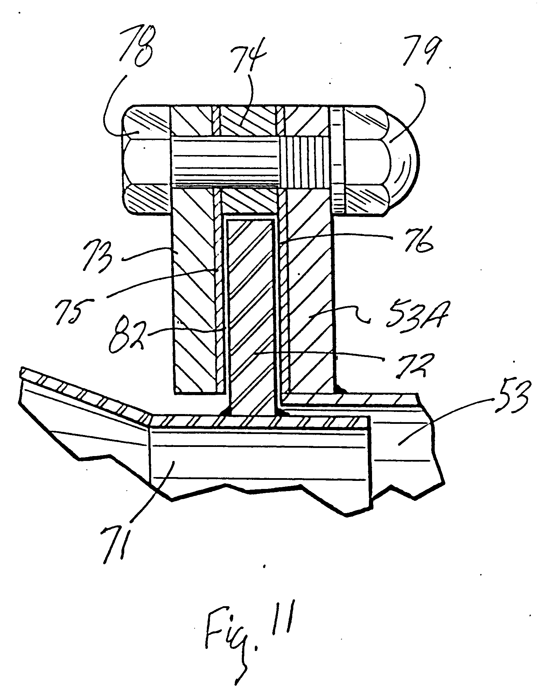

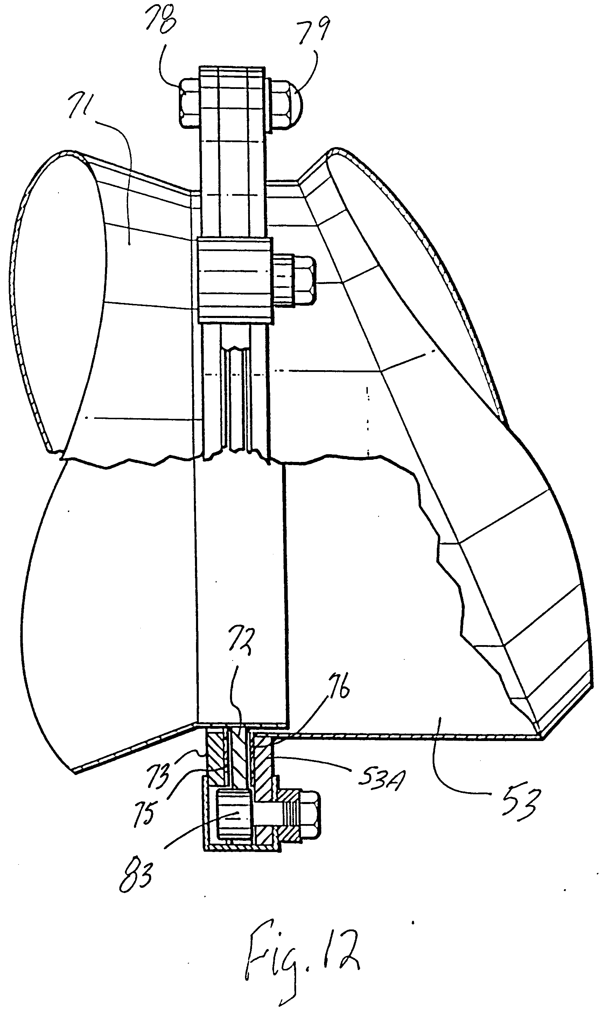

Es wird nun auf die Figuren 9 bis 12 verwiesen, in welchen ein Schwenkmechanismus (oder Dreheinheit) 70 abgebildet, der am zentralen Teil 51A des Verteilerrohres 51 angeordnet ist und die Drehbewegung des Verteilerrohres 51 ermöglicht, ohne eine wesentliche Bewegung des Leitkanals 53 zu bewirken. Wie in Figur 9 gezeigt, enthält der Schwenkmechanismus 70 einen Hohlkegel 71 mit einem angeschweissten Ringflansch 72, einen ersten und einen zweiten Ring 73 und 74 und eine erste und eine zweite Unterlagscheibe 75 und 76 aus Teflon. Der Kegel 71 ist an einem Ende fest mit dem zentralen Teil 51A des Verteilerrohres 51 und mit seinem gegenüberliegenden Ende am Leitkanal 53 verbunden. Wie am besten aus der Figur 11 entnehmbar, sind die Ringe 73 und 74 und die Unterlagscheiben 75 und 76 auf den jeweiligen Seiten des ringförmigen Kegelflansches 72 mittels verschiedener Schrauben 78 und Muttern 79 (nur ein Paar in Figur 9 ersichtlich) zusammengehalten. Jede Schraube 78 geht durch die Ringe 73, 74 und durch die Unterlagscheiben 75, 76 und durch einen am Leitkanal 53 angeschweissten Verbindungsflansch 53 hindurch. Der Ring 74 und die Unterlagscheiben 75 und 76 bilden zusammen einen Raum 82, in welchem eine Drehbewegung des Kegelflansches 72 möglich ist, ohne eine wesentliche Bewegung des Leitkanals 53 zu bewirken.
Wie aus den Figuren 10 und 12 ersichtlich, stehen vorzugsweise Rollen 83 mit der oberen Randfläche des Kegelflansches 72 in Wirkverbindung, um die Drehbewegung des Kegelflansches 72 innerhalb des Raumes 82 zu unterstützen. Gemäss der in Figur 11 gezeigten Ausführung enthält der Schwenkmechanismus 70 neun Sätze von Schrauben und Muttern 78 und 79, und drei Rollen 83.

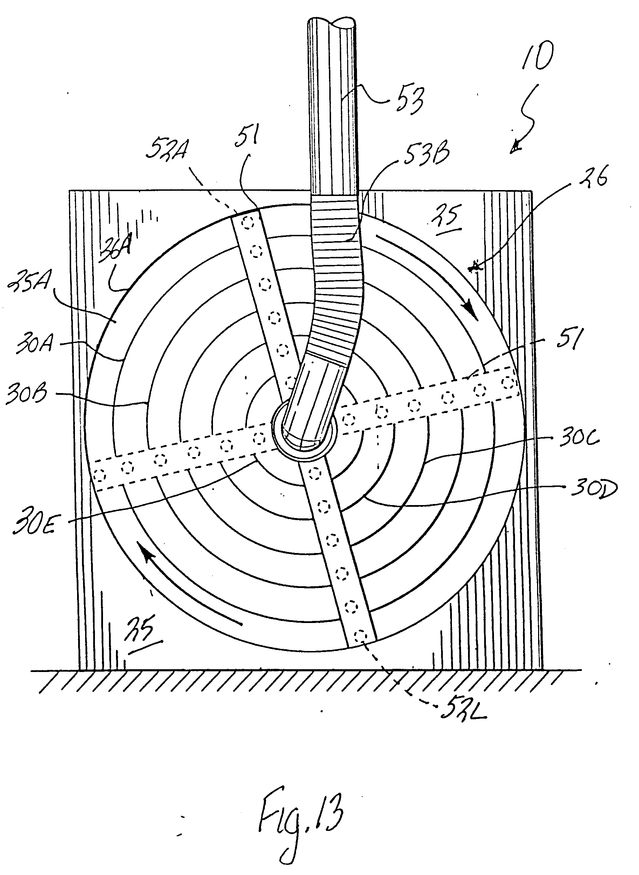

Der Leitkanal 53 enthält ferner vorzugsweise einen biegsamen Bereich 53B, der eine geringfügige Schwenkbewegung des Leitkanals 53 erlaubt, wenn der Kegelflansch 72 innerhalb des Raumes 82 herumdreht. Figur 13 stellt den Grad der Schwenkbewegung des Leitkanals 53 dar, während das Verteilerrohr 51 um eine durch die Antriebswelle 61 bestimmte Querachse herumdreht. Der biegsame Bereich 53B erlaubt ferner eine Hin- und Herbewegung des Verteilerrohres 51 in Querrichtung zum Fluidfilter 10.

In einer alternativen Ausführung der Erfindung enthält das Fluidfilter 10 keine oben erwähnte Filterreinigungseinrichtung 50. Anstelle davon werden die Filtrationsmedien 31A bis 31F regelmässig so oft als notwendig durch neue Filtrationsmedien ersetzt. Diese Ausführung kann insbesondere in Umgebungen angewendet werden, wo sich über eine relativ längere Zeitspanne relativ wenig Stoffpartikel auf den Filtrationsmedien ansammeln.

Ein Fluidfilter und ein Filtrierverfahren, um mitgeführte Stoffpartikel aus einem sich bewegenden Fluidstrom auszufiltrieren, sind oben beschrieben. Die obige Beschreibung der bevorzugten Ausführung der Erfindung und die beste Weise, die Erfindung auszuüben, sind ferner nur zum Zwecke der Darstellung und nicht einschränkend.

## Patentansprüche

1. Fluidfilter (10) zum Ausscheiden von mitgeführten Stoffpartikeln aus einem sich bewegenden Fluidstrom, welcher umfasst:
a) ein Filtergebilde (20) zur Befestigung des Fluidfilters (10) auf eine Tragfläche, das einen Fluid-Einlassbereich (26) und einen Fluid-Auslassbereich (27) zum Hindurchführen des Fluidstroms aufweist,
b) mehrere ineinandergesetzte durch das Filtergebilde (20) getragene, in einem Abstand zueinander angeordnete Filterrahmen (30A bis 30E), und
c) ein an jedem der Filterrahmen (30A bis 30E) befestigtes Filtrationsmedium (31A bis 31F), das zwischen dem Fluid-Einlassbereich (26) und dem Fluid-Auslassbereich (27) des Filtergebildes (20) angeordnet ist und auf einer Seite eine stromaufwärts liegende Filterfläche bestimmt, wobei jedes der Filtrationsmedien (31A bis 31F) das zu filtrierenden Fluid von der stromaufwärts liegenden Filterfläche (38) zur stromabwärts liegenden Filterfläche (39) aufnimmt, wodurch sich über die stromaufwärts liegende Filterfläche (38) eine Schicht aus Stoffpartikeln ansammelt.

2. Fluidfilter nach Anspruch 1, wobei die Filterrahmen des Filtergebildes (20) mehrere radial beabstandete konzentrische Trommeln (30A bis 30E) umfasst, die ineinandergesetzt und in fluidaufnehmender Beziehung zum Fluid-Einlassbereich (26) des Filtergebildes (20) angeordnet sind, wobei jeder der Filterrahmen (30A bis 30E) durch einen ringförmigen vorderen Aussenrand einer der Trommel und durch einen ringförmigen hinteren Aussenrand einer benachbarten Trommel (30A bis 30E) bestimmt ist.

3. Fluidfilter nach Anspruch 2, wobei jede der Trommeln (30A bis 30E) einen radial sich erstreckenden Ringflansch (32) aufweist, der am hinteren Aussenrand angeordnet ist, um ein Ende des Filtrationsmediums (31A bis 31F) daran zu befestigen.

4. Fluidfilter nach Anspruch 2 oder 3, wobei jede der Trommeln (30A bis 30E) konisch mit einem an der Stirnseite geringfügig kleineren Durchmesser als an der Rückseite ausgebildet ist.

5. Fluidfilter nach Anspruch 2, 3 oder 4, wobei das Filtrationsmedium (31A bis 31F) rohrförmig ist und sich längs der jeweiligen Trommel (30A bis 30E) erstreckt, und mit einem Ende am ringförmigen vorderen Aussenrand einer der Trommeln (30A bis 30E) und mit dem gegenüberliegenden Ende am dem hinteren Aussenrand der benachbarten Trommel (30A bis 30E) zugeordneten Ringflansch (32) befestigt ist.

6. Fluidfilter nach einem der vorhergehenden Ansprüche, mit einem Pumpmittel für das Fluid, das mit dem Fluid-Auslassbereich (27) des Filtergebildes (20) in Verbindung steht und eine negative Fluidströmung erzeugt, um den sich bewegenden Fluidstrom durch das Filtergebilde (20) vom Fluid-Einlassbereich (26) zum Fluid-Auslassbereich (27) zu treiben.

7. Fluidfilter nach einem der vorhergehenden Ansprüche, mit einer Filterreinigungseinrichtung (50) zur Entfernung der aus Stoffpartikeln bestehenden Schicht von der stromaufwärts liegenden Filterfläche des Filtrationsmediums (31A bis 31F).

8. Fluidfilter nach Anspruch 7, wobei die Filterreinigungseinrichtung (50) Absaugmittel aufweist, um eine negative Strömung des Fluids in bezug auf den sich bewegenden Fluidstrom zu erzeugen, und ein langgestrecktes, mit dem Absaugmittel in Verbindung stehendes Verteilerrohr (51) vorgesehen ist, das im Fluid-Einlassbereich (26) angeordnet ist und mindestens ein nach aussen ragendes, daran angeformtes Rohr (52A bis 52L) aufweist, um das Filtergebilde (20) zu durchdringen und zur Reinigung des Filtrationsmediums (31A bis 31F) mit der stromaufwärts liegenden Filterfläche (38) des Filtrationsmediums (31A bis 31F) in Wirkverbindung zu bringen, und dadurch den Fluidstrom durch das Filtrationsmedium (31A bis 31F) von der stromaufwärts liegenden Filterfläche (38) zur stromabwärts liegenden Filterfläche (39) zu erhöhen.

9. Fluidfilter nach Anspruch 8, wobei die Filterreinigungseinrichtung (50) ferner ein durch das Filtergebilde (20) getragenes Antriebsmittel aufweist, das in Wirkverbindung mit dem Verteilerrohr (51) steht, um das mindestens eine Rohr in bezug auf das Filtrationsmedium (31A bis 31F) zur dessen Reinigung hin- und herzubewegen.

10. Fluidfilter nach Anspruch 8 oder 9, wobei das Verteilerrohr (51) eine Drehachse (61) aufweist und das Antriebsmittel auf der Drehachse (61) angeordnete Drehungsmittel (60) aufweist und in Wirkverbindung mit dem Verteilerrohr (51) steht, um eine Drehbewegung des mindestens einen Rohres (52A bis 52L) auf den Umfang des zu reinigenden Filtrationsmediums (31A bis 31F) zu ergeben.

11. Fluidfilter nach Anspruch 9 oder 10, wobei das Antriebsmittel ferner hin- und herbewegbare Mittel (62) aufweist, die mit dem Verteilerrohr (51) in Wirkverbindung stehen, um eine Hin- und Herbewegung des mindestens einen Rohres (52A bis 52L) längs des zu reinigenden Filtrationsmediums (31A bis 31F) zu ergeben.

12. Fluidfilter nach einem der Ansprüche 8 bis 11, wobei das Verteilerrohr zwei daran befestigte Rohre (52A bis 52L) aufweist, um das Filtrationsmedium (31A bis 31F) zu reinigen, wobei die Rohre (52A bis 52L) längs des Verteilerrohres (51) in einem im wesentlichen mit dem Durchmesser des zu reinigenden Filtrationsmediums (31A bis 31F) übereinstimmenden Abstand zueinander angeordnet sind, wodurch der gesamte Umfangsbereich des Filtrationsmediums (31A bis 31F) bei einer 180°-Drehung des Verteilerrohres um seine Drehachse (61) reinigbar ist.

13. Fluidfilter nach Anspruch 12, wobei jedes der zwei Rohre (52A bis 52L) eine an dessen freien Ende befestigte Düse (54) mit einer darin gebildeten Öffnung (55) aufweist, welche zur Reinigung des Filtrationsmediums (31A bis 31F) mit der aufwärts liegenden Filterfläche (38) des Filtrationsmediums (31A bis 31F) in Wirkverbindung steht, wobei die Öffnung (55) einen Bereich mit einer beschleunigten negativen Strömung bestimmt, um die Reinigungsleistung der jeweiligen Rohre (52A bis 52L) zu erhöhen.

14. Fluidfilter nach Anspruch 12 oder 13, wobei das erste der zwei Rohre (52A bis 52L) zur Reinigung einer ersten Hälfte des Filtrationsmediums (31A bis 31F) relativ lang und das zweite der Rohre (52A bis 52L) zur Reinigung einer zweiten Hälfte des Filtrationsmediums (31A bis 31F) relativ kurz ist, wodurch die zwei Rohre (52A bis 52L) und die zugehörigen Absaugdüsen mit dem Drehungsmittel (60) und dem hin- und herbewegbaren Mittel (62) zusammenwirken, um die stromaufwärts liegende Filterfläche (38) des Filtrationsmediums (31A bis 31F) gemeinsam in einem spiralförmigen Verlauf zu reinigen.

15. Verfahren zur Ausscheidung von mitgeführten Stoffpartikeln aus einem sich bewegenden Fluidstrom, das folgende Schritte aufweist:
a) ein einen Fluid-Einlassbereich (26) und einen Fluid-Auslassbereich (27) zum Hindurchführen des Fluidstroms aufweisendes Filtergebilde (20) bereitstellen,
b) mehrere ineinandergesetzte, zueinander beabstandete Filtrationsmedien (31A bis 31F) innerhalb des Filtergebildes (20) in einer filtrierenden Beziehung zum Fluid-Einlassbereich (26) des Filtergebildes (20) anordnen,
c) den sich bewegenden Fluidstrom durch das Filtergebilde (20) und durch die Filtrationsmedien (31A bis 31F) von einer stromaufwärts liegenden Filterfläche (38) zu einer stromabwärts liegenden Filterfläche (39) treiben, wodurch sich eine Schicht aus Stoffpartikeln über die stromaufwärts liegende Filterfläche (38) des Filtrationsmediums (31A bis 31F) ansammelt, und
d) die stromaufwärts liegende Filterfläche (38) der Filtrationsmedien (31A bis 31F) reinigen, um die Fluidströmung durch das Filtrationsmedium (31A bis 31F) von der stromaufwärts liegenden Filterfläche (38) zur stromabwärts liegenden Filterfläche (39) zu erhöhen.

16. Verfahren nach Anspruch 15, wobei in einem weiteren Schritt mehrere die jeweiligen Filtrationsmedien (31A bis 31F) tragende Filterrahmen (30A bis 30E) innerhalb des Filtergebildes (20) angeordnet werden.

17. Verfahren nach Anspruch 16, wobei das Anordnen von mehreren Filterrahmen den Schritt aufweist, mehrere radial beabstandete konzentrische Trommel (30A bis 30E) ineinanderzusetzen und in einer fluidaufnehmenden Beziehung zum Fluid-Einlassbereich (26) des Filtergebildes (20) zu bringen, wobei jeder der Filterrahmen durch einen ringförmigen vorderen Aussenrand einer der Trommeln (30A bis 30E) und einen ringförmigen hinteren Aussenrand einer benachbarten Trommel (30A bis 30E) bestimmt ist.

18. Verfahren nach einem der Ansprüche 15 bis 17, wobei das Antreiben des sich bewegenden Fluidstroms den Schritt aufweist, den Fluid-Auslassbereich (27) des Filtergebildes (20) mit einem fluidpumpenden Mittel zu verbinden, um eine negative Strömung des Fluids zu erzeugen.

19. Verfahren nach einem der Ansprüche 15 bis 18, wobei das Reinigen der Filtrationsmedien (31A bis 31F) folgende Schritte aufweist:
a) ein langgestrecktes Verteilerrohr (51) im Fluid-Einlassbereich (26) des Filtergebildes (20) anordnen,
b) mit dem Verteilerrohr (51) verbundenen Absaugmittel vorsehen, um eine negative Fluidströmung in bezug auf den sich bewegenden Fluidstrom zu erzeugen, und
c) mindestens ein nach aussen ragendes Rohr (52A bis 52L) an das Verteilerrohr (51) in Wirkverbindung befestigen, wobei das mindestens eine Rohr (52A bis 52L) das Filtergebilde (20) durchdringt und dieses mit der stromaufwärts liegenden Filterfläche (38) der jeweiligen Filtrationsmedien (31A bis 31F) in Wirkverbindung gebracht wird, um die Filtrationsmedien (31A bis 31F) zu reinigen.

## Claims

1. Fluid filter (10) for separating entrained particles of material out of a moving fluid stream, which comprises:
a) a filter structure (20) for fastening the fluid filter (10) to a carrier surface, the said filter structure having a fluid inlet region (26) and a fluid outlet region (27) for leading through the fluid stream,
b) a plurality of filter frames (30A to 30E), which are placed one in the other, are carried by the filter structure (20) and are arranged at a distance from one another, and
c) a filtration medium (31A to 31F) which is fastened to each of the filter frames (30A to 30E) and which is arranged between the fluid inlet region (26) and the fluid outlet region (27) of the filter structure (20) and, on one side, defines an upstream filter surface, each of the filtration media (31A to 31F) receiving the fluid to be filtered, from the upstream filter surface (38) to the downstream filter surface (39), with the result that a layer of particles of material accumulates over the upstream filter surface (38).

2. Fluid filter according to Claim 1, in which the filter frames of the filter structure (20) comprise a plurality of concentric drums (30A to 30E) which are at a radial distance from one another, are placed one in the other and are arranged in fluid-receiving relationship with the fluid inlet region (26) of the filter structure (20), each of the filter frames (30A to 30E) being defined by an annular front outer edge of one of the drums and by an annular rear outer edge of an adjacent drum (30A to 30E).

3. Fluid filter according to Claim 2, in which each of the drums (30A to 30E) has a radially extending annular flange (32) which is arranged at the rear outer edge, in order to fasten one end of the filtration medium (31A to 31F) thereto.

4. Fluid filter according to Claim 2 or 3, in which each of the drums (30A to 30E) is designed conically with a diameter which is slightly smaller on the front face than on the rear face.

5. Fluid filter according to Claim 2, 3 or 4, in which the filtration medium (31A to 31F) is tubular and extends along the respective drum (30A to 30E), and is fastened, at one end, to the annular front outer edge of one of the drums (30A to 30E) and, at the opposite end, to the annular flange (32) assigned to the rear outer edge of the adjacent drum (30A to 30E).

6. Fluid filter according to one of the preceding claims with a pumping means for the fluid, the said pumping means being connected to the fluid outlet region (27) of the filter structure (20) and generating a negative fluid flow, in order to drive the moving fluid stream through the filter structure (20) from the fluid inlet region (26) to the fluid outlet region (27).

7. Fluid filter according to one of the preceding claims, with a filter cleaning device (50) for removing the layer consisting of particles of material from the upstream filter surface of the filtration medium (31A to 31F).

8. Fluid filter according to Claim 7, in which the filter cleaning device (50) has a suck-away means, in order to generate a negative flow of the fluid in relation to the moving fluid stream, and in which there is provided an elongated distributor pipe (51), which is connected to the suck-away means and which is arranged in the fluid inlet region (26) and has at least one outward-projecting pipe (52A to 52L) integrally formed thereon, in order to pass through the filter structure (20) and to connect operatively to the upstream filter surface (38) of the filtration medium (31A to 31F) for the purpose of cleaning the filtration medium (31A to 31F), and in order thereby to increase the fluid stream through the filtration medium (31A to 31F) from the upstream filter surface (38) to the downstream filter surface (39).

9. Fluid filter according to Claim 8, in which the filter cleaning device (50) has, furthermore, a drive means which is carried by the filter structure (20) and which is connected operatively to the distributor pipe (51), in order to move the at least one pipe to and fro in relation to the filtration medium (31A to 31F) for the purpose of cleaning the latter.

10. Fluid filter according to Claim 8 or 9, in which the distributor pipe (51) has a rotary shaft (61) and the drive means has rotation means (60) arranged on the rotary shaft (61) and is connected operatively to the distributor pipe (51), in order to produce a rotation movement of the at least one pipe (52A to 52L) onto the circumference of the filtration medium (31A to 31F) to be cleaned.

11. Fluid filter according to Claim 9 or 10, in which the drive means has, furthermore, means (62) which are capable of being moved to and fro and which are connected operatively to the distributor pipe (51), in order to produce a to-and-fro movement of the at least one pipe (52A to 52L) along the filtration medium (31A to 31F) to be cleaned.

12. Fluid filter according to one of Claims 8 to 11, in which the distributor pipe has two pipes (52A to 52L) fastened thereto, in order to clean the filtration medium (31A to 31F), the pipes (52A to 52L) being arranged along the distributor pipe (51) at a distance from one another which corresponds essentially to the diameter of the filtration medium (31A to 31F) to be cleaned, with the result that the entire circumferential region of the filtration medium (31A to 31F) can be cleaned during a rotation of the distributor pipe through 180° about its rotary shaft (61).

13. Fluid filter according to Claim 12, in which each of the two pipes (52A to 52L) has a nozzle (54) which is fastened to its free end and possesses an orifice (55) which is formed therein and which is connected operatively to the upstream filter surface (38) of the filtration medium (31A to 31F) for the purpose of cleaning the filtration medium (31A to 31F), the orifice (55) defining a region with an accelerated negative flow, in order to increase the cleaning capacity of the respective pipes (52A to 52L).

14. Fluid filter according to Claim 12 or 13, in which the first of the two pipes (52A to 52L) for cleaning a first half of the filtration medium (31A to 31F) is relatively long and the second of the pipes (52A to 52L) for cleaning a second half of the filtration medium (31A to 31F) is relatively short, with the result that the two pipes (52A to 52L) and the associated suck-away nozzles cooperate with the rotation means (60) and the means (62) capable of being moved to and fro, in order to clean the upstream filter surface (38) of the filtration medium (31A to 31F) jointly in a spiral run.

15. Method for separating entrained particles of material out of a moving fluid stream, which method has the following steps:
a) providing a filter structure (20) having a fluid inlet region (26) and a fluid outlet region (27) for leading through the fluid stream,
b) arranging a plurality of filtration media (31A to 31F), placed one in the other and located at a distance from one another, put in the filter structure (20) in a filtering relationship with the fluid inlet region (26) of the filter structure (20),
c) driving the moving fluid stream through the filter structure (20) and through the filtration media (31A to 31F) from an upstream filter surface (38) to a downstream filter surface (39), with the result that a layer of particles of material accumulates over the upstream filter surface (38) of the filtration medium (31A to 31F), and
d) cleaning the upstream filter surface (38) of the filtration media (31A to 31F), in order to increase the fluid flow through the filtration media (31A to 31F) from the upstream filter surface (38) to the downstream filter surface (39).

16. Method according to Claim 15, in which in a further step a plurality of filter frames (30A to 30E), carrying the respective filtration media (31A to 31F), are arranged within the filter structure (20).

17. Method according to Claim 16, in which the arranging of a plurality of filter frames has the step of placing one in the other a plurality of concentric drums (30A to 30E), located at a radial distance from one another and of bringing them into a fluid-receiving relationship with the fluid inlet region (26) of the filter structure (20), each of the filter frames being defined by an annular front outer edge of one of the drums (30A to 30E) and an annular rear outer edge of an adjacent drum (30A to 30E).

18. Method according to one of Claims 15 to 17, in which the driving of the moving fluid stream has the step of connecting the fluid outlet region (27) of the filter structure (20) to a fluid-pumping means, in order to generate a negative flow of the fluid.

19. Method according to one of Claims 15 to 18, in which the cleaning of the filtration media (31A to 31F) has the following steps:
a) arranging an elongated distributor pipe (51) in the fluid inlet region (26) of the filter structure (20),
b) providing suck-away means connected to the distributor pipe (51), in order to generate a negative fluid flow in relation to the moving fluid stream, and
c) fastening at least one outward-projecting pipe (52A to 52L) to the distributor pipe (51) so as to be connected operatively thereto, the at least one pipe (52A to 52L) passing through the filter structure (20) and the latter being connected operatively to the upstream filter surface (38) of the respective filtration media (31A to 31F), in order to clean the filtration media (31A to 31F).

## Revendications

1. Filtre à fluide (10) pour l'élimination de particules de matière entraînées dans un courant de fluide en mouvement, comprenant:
a) un corps (20), pour la fixation du filtre (10) sur une surface de support, présentant une zone d'admission (26) et une zone de sortie (27) de fluide pour le passage à travers lui du courant,
b) plusieurs cadres de filtre (30A à 30E), imbriqués à une certaine distance les uns des autres, portés par le corps de filtre (20), et
c) un milieu filtrant (31A à 31F) fixé à chacun des cadres (30A à 30E), disposé entre la zone d'admission (26) et la zone de sortie (27) de fluide du corps (20) et définissant d'un côté une surface filtrante située en amont, chacun des milieux filtrants (31A à 31F) recevant le fluide à filtrer depuis la surface filtrante (38) située en amont jusqu'à la surface filtrante (39) située en aval, une couche de particules de matière s'accumulant ainsi sur cette surface filtrante (38).

2. Filtre à fluide selon la revendication 1, dans lequel les cadres de filtre du corps (20) comprennent plusieurs tambours concentriques (30A à 30E), espacés radialement les uns des autres, qui sont imbriqués les uns dans les autres et en relation de réception de fluide par rapport à la zone d'admission (26) du corps (20), chacun des cadres (30A à 30E) étant défini par un bord extérieur avant annulaire de l'un des tambours et par un bord extérieur arrière annulaire d'un tambour voisin (30A à 30E).

3. Filtre à fluide selon la revendication 2, dans lequel chacun des tambours (30A à 30E) présente une bride annulaire (32) s'étendant radialement, disposée sur le bord extérieur arrière, afin d'y fixer une extrémité du milieu filtrant (31A à 31F).

4. Filtre à fluide selon la revendication 2 ou 3, dans lequel chacun des tambours (30A à 30E) a une forme conique avec un diamètre du côté avant légèrement plus petit que du côté arrière.

5. Filtre à fluide selon la revendication 2, 3 ou 4, dans lequel le milieu filtrant (31A à 31F) a une forme tubulaire, s'étend le long du tambour respectif (30A à 30E), et est fixé, par une extrémité, au bord extérieur avant annulaire de l'un des tambours (30A à 30E) et, par l'extrémité opposée, à la bride annulaire (32) associée au bord extérieur arrière du tambour voisin (30A à 30E).

6. Filtre à fluide selon l'une quelconque des revendications précédentes, comprenant une pompe pour le fluide, connectée à la zone de sortie de fluide (27) du corps (20), et produisant un écoulement de fluide négatif, pour entraîner le courant de fluide en mouvement à travers le corps (20), depuis la zone d'admission (26) jusqu'à la zone de sortie (27).

7. Filtre à fluide selon l'une quelconque des revendications précédentes, comprenant un dispositif (50) de nettoyage pour éliminer la couche constituée de particules de matière de la surface filtrante, située en amont, du milieu filtrant (31A à 31F).

8. Filtre à fluide selon la revendication 7, dans lequel le dispositif (50) de nettoyage comporte un moyen d'aspiration pour produire un écoulement négatif du fluide par rapport au courant de fluide en mouvement, et dans lequel est prévu, connecté au moyen d'aspiration, un distributeur tubulaire longitudinal (51), disposé dans la zone d'admission (26), et au moins un tuyau (52A à 52L), dépassant vers l'extérieur et formé sur celui-ci, pour traverser le corps (20) et l'amener en relation active avec la surface filtrante (38), située en amont du milieu filtrant (31A à 31F), pour nettoyer ce milieu filtrant (31A à 31F) et pour augmenter de ce fait le courant de fluide traversant ce milieu (31A à 31F), depuis la surface filtrante (38) située en amont jusqu'à la surface filtrante (39) située en aval.

9. Filtre à fluide selon la revendication 8, dans lequel le dispositif (50) comporte en outre un moyen d'entraînement porté par le corps (20), en relation active avec le distributeur (51) pour déplacer d'avant en arrière au moins un tuyau par rapport au milieu filtrant (31A à 31F), en vue de son nettoyage.

10. Filtre à fluide selon la revendication 8 ou 9, dans lequel le distributeur (51) comporte un axe de rotation (61), le moyen d'entraînement présentant un moyen de rotation (60) disposé sur l'axe (61) et se trouvant en relation active avec le distributeur (51), pour générer un mouvement de rotation d'au moins un tuyau (52A à 52L) sur la périphérie du milieu filtrant à nettoyer (31A à 31F).

11. Filtre à fluide selon la revendication 9 ou 10, dans lequel le moyen d'entraînement présente en outre des moyens (62) déplaçables d'avant en arrière, en relation active avec le distributeur (51), pour générer un mouvement d'avant en arrière d'au moins un tuyau (52A à 52L), le long du milieu filtrant (31A à 31F) à nettoyer.

12. Filtre à fluide selon l'une quelconque des revendications 8 à 11, dans lequel le distributeur comporte deux tuyaux (52A à 52L) qui lui sont fixés pour nettoyer le milieu filtrant (31A à 31F), ces tuyaux (52A à 52L) étant disposés le long du distributeur (51) à une distance l'un de l'autre correspondant essentiellement au diamètre du milieu filtrant (31A à 31F) à nettoyer, la zone périphérique totale du milieu filtrant (31A à 31F) pouvant ainsi être nettoyée par une rotation de 180° du distributeur autour de son axe de rotation (61).

13. Filtre à fluide selon la revendication 12, dans lequel chacun des deux tuyaux (52A à 52L) présente une buse (54) fixée à l'extrémité libre de celui-ci, avec une ouverture (55) formée dans celle-ci, laquelle se trouve en relation active avec la surface filtrante (38), située en amont, du milieu filtrant (31A à 31F), pour le nettoyage de ce milieu filtrant (31A à 31F), l'ouverture (55) définissant une zone à écoulement accéléré négatif, pour augmenter la puissance de nettoyage des tuyaux respectifs (52A à 52L).

14. Filtre à fluide selon la revendication 12 ou 13, dans lequel le premier des deux tuyaux (52A à 52L) est relativement long pour nettoyer une première moitié du milieu filtrant (31A à 31F), et le deuxième des tuyaux (52A à 52L) est relativement court pour nettoyer une deuxième moitié du milieu filtrant (31A à 31F), les deux tuyaux (52A à 52L) et les buses d'aspiration associées coopérant avec le moyen de rotation (60) et le moyen (62) déplaçable d'avant en arrière, pour nettoyer en même temps, suivant un parcours en spirale, la surface filtrante (38), située en amont, du milieu filtrant (31A à 31F).

15. Procédé pour l'élimination de particules de matière entraînées d'un courant de fluide en mouvement, qui comprend les étapes suivantes:
a) Utiliser un corps de filtre (20) présentant une zone d'admission (26) et une zone de sortie (27) de fluide pour le passage à travers lui du courant de fluide,
b) disposer plusieurs milieux filtrants (31A à 31F) à une certaine distance les uns des autres, à l'intérieur du corps (20) en relation filtrante par rapport à la zone d'admission de fluide (26) du corps (20),
c) entraîner le courant de fluide en mouvement à travers le corps (20) et les milieux filtrants (31A à 31F), depuis une surface filtrante (38) située en amont jusqu'à une surface filtrante (39) située en aval, une couche de particules de matière s'accumulant ainsi sur la surface filtrante (38), située en amont, du milieu filtrant (31A à 31F), et
d) nettoyer la surface filtrante (38), située en amont, des milieux filtrants (31A à 31F), pour augmenter l'écoulement de fluide à travers ce milieu filtrant (31A à 31F), depuis la surface filtrante (38), située en amont, jusqu'à la surface filtrante (39), située en aval.

16. Procédé selon la revendication 15, dans lequel, dans une étape supplémentaire, plusieurs cadres de filtre (30A à 30E), portant des milieux filtrants respectifs (31A à 31F), sont disposés à l'intérieur du corps de filtre (20).

17. Procédé selon la revendication 16, dans lequel l'agencement de plusieurs cadres de filtre consiste à imbriquer plusieurs tambours (30A à 30E) concentriques, espacés radialement les uns des autres et à les amener en relation de réception de fluide par rapport à la zone d'admission (26) du corps (20), chacun des cadres étant défini par un bord extérieur avant annulaire de l'un des tambours (30A à 30E) et par un bord extérieur arrière annulaire d'un tambour voisin (30A à 30E).

18. Procédé selon l'une quelconque des revendications 15 à 17, dans lequel l'entraînement du courant de fluide en mouvement comporte l'étape consistant à connecter la zone de sortie de fluide (27) du corps (20) à un moyen de pompage, pour produire un écoulement négatif du fluide.

19. Procédé selon l'une quelconque des revendications 15 à 18, dans lequel le nettoyage des milieux filtrants (31A à 31F) présente les étapes suivantes:
a) disposer un distributeur tubulaire longitudinal (51) dans la zone d'admission de fluide (26) du corps (20),
b) prévoir des moyens d'aspiration connectés au distributeur (51), pour produire un écoulement de fluide négatif par rapport au courant de fluide en mouvement, et
c) fixer en relation active au moins un tuyau dépassant vers l'extérieur (52A à 52L) sur le distributeur (51), au moins un tuyau (52A à 52L) traversant le corps de filtre (20) et celui-ci étant amené en relation active avec la surface filtrante (38), située en amont, des milieux filtrants respectifs (31A à 31F), pour nettoyer ces milieux filtrants (31A à 31F).
